# DEMANDE DE BREVET EUROPEEN

(11) **EP 1 731 795 A2**
(43) Date de publication de la demande: **13.12.2006**
(21) Numéro de dépôt: 06300484.0
(22) Date de dépôt: 17.05.2006
(51) Int. Cl.: F16H 3/093

(54) **Commande de marche arrière pour boîte de vitesses**

(30) Priorité: 09.06.2005 FR 0505862
(71) Demandeur: Renault SAS, 92100 Boulogne Billancourt (FR)
(72) Inventeur: Buannec, Michel, 78480, Verneuil sur Seine (FR); Picard, Marc, 92500, Rueil Malmaison (FR)
(74) Mandataire: Rougemont, Bernard

(57) **Abrégé**

L'invention a pour objet une commande de marche arrière pour une boîte de vitesses comportant des pignons fous de marche avant et de marche arrière répartis sur deux arbres secondaires portant chacun un pignon d'attaque et pouvant être solidarisés en rotation, chacun avec l'arbre qui le porte, par un organe d'accouplement sélectif.

Selon l'invention, un premier pignon fou de marche avant (32) porté par un premier arbre secondaire (3) est monté fixe à une extrémité d'une jupe cylindrique (70) tournant librement sur ledit arbre (3) et sur laquelle est monté fixe un moyeu de synchroniseur (71) d'un organe double d'accouplement sélectif (7), le pignon fou de marche arrière (6) étant monté fou sur la jupe cylindrique (70). Le moyeu de synchroniseur (71) peut être sélectivement solidarisé en rotation, soit avec le premier arbre secondaire (3) pour l'engagement de la vitesse correspondant au premier pignon fou (32) de marche avant, soit avec le pignon fou de marche arrière (6) qui est relié cinématiquement à un second pignon fou de marche avant (41) porté par le second arbre secondaire (4), avec inversion du sens de rotation, pour la commande de marche arrière.

L'invention s'applique spécialement à une boîte de vitesses à double embrayage.

## Description

L'invention a pour objet une commande de marche arrière pour une boîte de vitesses, en particulier de véhicule automobile et s'applique, plus spécialement, à une boîte de vitesses à double embrayage.

Pour faire varier le rapport de démultiplication entre l'arbre de sortie du moteur et les roues d'un véhicule, on utilise habituellement une boîte de vitesses à plusieurs rapports, associée à un embrayage.

Habituellement une boîte de vitesses comporte un arbre primaire central sur lequel est appliqué le couple moteur et qui porte un certain nombre de pignons fixes engrenant avec des pignons fous répartis sur deux arbres secondaires tournant chacun autour d'un axe parallèle à l'axe central de l'arbre primaire. Chaque arbre secondaire porte à son extrémité, un pignon d'attaque engrenant avec un différentiel pour transmettre le couple moteur appliqué sur l'arbre primaire en passant par l'un des pignons fous qui, pour l'engagement de la vitesse correspondante, est solidarisé en rotation avec l'arbre secondaire qui le porte par un organe d'accouplement sélectif du type à crabotage avec synchroniseur.

Dans le cas d'une boîte de vitesses à double embrayage, le couple moteur est appliqué sur deux arbres primaires coaxiaux enfilés l'un dans l'autre et portant chacun un groupe de pignons fixes engrenant avec des pignons fous répartis sur les deux arbres secondaires, l'un des arbres primaires correspondant aux vitesses paires et l'autre aux vitesses impaires.

En outre, un autre pignon fou monté sur l'un des deux arbres secondaires et correspondant au rapport de marche arrière, est relié cinématiquement, d'un côté à l'un des arbres primaires et, de l'autre, à l'un des arbres secondaires avec une inversion du sens de rotation afin de commander la rotation du différentiel en sens inverse de la marche avant.

Le document FR-A-2 802 600, par exemple, décrit une boîte de vitesses à double embrayage comportant deux arbres primaires coaxiaux, reliés chacun à un embrayage, respectivement un arbre central plein qui porte, sur une partie arrière, un premier groupe de pignons fixes et est enfilé, par sa partie avant, dans un arbre tubulaire portant un second groupe de pignons fixes.

Dans cette disposition, on obtient les six rapports de marche avant au moyen de cinq pignons fixes et de trois paires de pignons fous associées chacune à un crabot double, respectivement deux pignons fous portés par un premier arbre secondaire qui porte également le pignon fou de marche arrière et quatre pignons fous portés par le second arbre secondaire. Ces pignons fous engrènent, à l'arrière, avec trois pignons fixes de l'arbre primaire central qui correspondent aux vitesses impaires, respectivement première, troisième et cinquième et, à l'avant, avec deux pignons fixes de l'arbre primaire creux qui correspondent aux vitesses paires, respectivement deuxième, quatrième et sixième.

Le pignon fou de marche arrière, qui est placé à l'arrière du premier arbre secondaire, engrène avec le pignon fou de première qui est placé à l'arrière du second arbre secondaire et sert, alors, de simple pignon de renvoi pour une inversion de sens de rotation, le pignon fou de marche arrière étant solidarisé avec l'arbre qui le porte par un crabot simple.

Bien que l'on utilise seulement cinq pignons fixes, ce qui permet de réduire la longueur des arbres primaires, une telle disposition reste relativement encombrante.

D'autres dispositions ont été imaginées notamment pour la commande de marche arrière. Par exemple, la boîte de vitesses décrite dans le document DE-A-198 21 164 comporte également six pignons fous de marche avant et un pignon fou de marche arrière mais ce dernier est placé à l'avant de l'arbre secondaire et le couple moteur est transmis au pignon de première par un troisième arbre secondaire de renvoi portant deux pignons fixes, respectivement un pignon arrière qui engrène avec le pignon fou de première et un pignon avant qui engrène avec le pignon fou de marche arrière. Cet arbre de renvoi doit être relativement long et augmente encore l'encombrement de la boîte.

Par ailleurs, on s'est avisé qu'il serait intéressant, pour la commande de marche arrière, d'utiliser une vitesse paire de rang élevé, par exemple une sixième, en vitesse d'entrée du couple et de faire transiter celui-ci jusqu'à un rapport à fort ratio, par exemple une première, pour obtenir une marche arrière ayant un rapport compris entre la première et la deuxième. Cependant, une telle disposition augmente le nombre de synchroniseurs et il est difficile de placer l'ensemble des mécanismes nécessaires sur une longueur d'arbre réduite.

L'invention a pour objet de résoudre de tels problèmes grâce à une nouvelle disposition permettant, pour la commande de marche arrière, de faire transiter un couple faible, par exemple de sixième ou cinquième jusqu'à un rapport à fort ratio, par exemple de première ou de seconde, tout en conservant un encombrement relativement faible de la boîte, l'arbre de renvoi et l'arbre secondaire portant le pignon de marche arrière, ayant une longueur limitée.

L'invention concerne donc, d'une façon générale, une commande de marche arrière pour une boîte de vitesses comportant une pluralité de pignons fixes montés sur au moins un arbre primaire entraîné en rotation autour d'un axe central et avec lesquels engrènent des pignons fous de marche avant et un pignon fou de marche arrière qui sont répartis sur deux arbres secondaires montés rotatifs, chacun, autour d'un axe parallèle à l'axe central et portant chacun un pignon d'attaque d'un différentiel pour la transmission d'un couple moteur appliqué sur l'arbre primaire, chaque pignon fou de marche avant pouvant être solidarisé en rotation avec l'arbre qui le porte par un moyen d'accouplement sélectif pour l'engagement de la vitesse correspondante.

Conformément à l'invention, un premier pignon fou de marche avant porté par un premier arbre secondaire est monté fixe à une première extrémité d'une jupe cylindrique tournant librement sur le premier arbre secondaire et ayant une seconde extrémité sur laquelle est monté fixe un moyeu de synchroniseur d'un organe double d'accouplement sélectif, le pignon fou de marche arrière étant monté fou sur la jupe cylindrique, entre les deux extrémités de celle-ci, et ledit moyeu de synchroniseur peut être solidarisé sélectivement en rotation, soit avec le premier arbre secondaire pour l'engagement de la vitesse correspondant au premier pignon fou de marche avant, soit avec le pignon fou de marche arrière pour l'engagement de la marche arrière à partir dudit premier pignon fou de marche avant, le pignon fou de marche arrière étant relié cinématiquement à un second pignon fou de marche avant porté par le second arbre secondaire, avec inversion du sens de rotation, pour la commande de marche arrière par solidarisation en rotation dudit second pignon fou avec le second arbre secondaire.

Avantageusement, la jupe cylindrique et le premier pignon fou de marche avant sont réalisés en une seule pièce, et la jupe cylindrique est montée rotative sur le premier arbre secondaire par l'intermédiaire d'une cage à aiguilles.

Dans un mode de réalisation préférentiel, le pignon fou de marche arrière est monté rotatif sur la jupe cylindrique par l'intermédiaire d'une bague mince et est associé à un circuit de lubrification sous pression débouchant entre la jupe cylindrique et une portée de centrage du pignon fou de marche arrière sur ladite jupe.

De façon particulièrement avantageuse, le circuit de lubrification comporte une conduite d'alimentation ménagée à l'intérieur du premier arbre secondaire et reliée à une source de lubrifiant sous pression, un espace annulaire étanche, ménagé au niveau du roulement, entre deux faces opposées de la jupe cylindrique et de l'arbre secondaire et relié à la conduite d'alimentation par au moins un conduit transversal de liaison, et au moins un conduit traversant la jupe et débouchant à une première extrémité dans l'espace annulaire et à une seconde extrémité dans l'interface entre la jupe cylindrique et la portée de centrage du pignon fou de marche arrière.

De plus, des butés axiales sont interposées, de chaque côté du pignon fou de marche arrière, entre ce dernier et, respectivement, le moyeu de synchroniseur et le premier pignon fou de marche avant.

Selon une autre caractéristique préférentielle, le pignon fou de marche arrière est relié cinématiquement au second pignon fou de marche avant par l'intermédiaire d'un arbre de renvoi parallèle à l'axe central et portant deux pignons fixes écartés engrenant, l'un avec le pignon fou de marche arrière et l'autre avec un pignon intermédiaire engrenant lui-même avec le second pignon fou de marche avant pour l'inversion du sens de rotation.

L'invention s'applique spécialement à une boîte de vitesses à 6 vitesses avant et double embrayage, comportant deux groupes de pignons fixes portés respectivement par deux arbres primaires coaxiaux enfilés l'un dans l'autre, respectivement un arbre primaire central et un arbre primaire tubulaire et deux arbres secondaires portant chacun un pignon d'attaque d'un différentiel, respectivement un premier arbre secondaire portant un pignon fou de marche arrière et au moins deux pignons fous de marche avant et un second arbre secondaire portant au plus quatre pignons fous de marche avant, chaque pignon fou de marche avant pouvant être solidarisé sélectivement en rotation avec l'arbre qui le porte, par un organe d'accouplement sélectif.

Selon l'invention, l'organe d'accouplement sélectif associé à un premier pignon fou du premier arbre secondaire engrenant avec un pignon fixe d'un premier arbre primaire comporte un moyeu de synchroniseur fixé en rotation à une seconde extrémité d'une jupe cylindrique montée librement rotative sur le premier arbre secondaire et ayant une première extrémité sur laquelle est fixé en rotation ledit premier pignon fou de marche avant, et pouvant être solidarisé sélectivement, du côté opposé à ladite jupe, avec un moyeu d'accouplement fixé en rotation sur le premier arbre secondaire, et le pignon fou de marche arrière est monté fou sur ladite jupe cylindrique, entre le premier pignon fou de marche avant et le moyeu de synchroniseur et peut être solidarisé sélectivement avec ce dernier, ledit pignon fou de marche arrière engrenant avec un premier pignon fixe monté à une extrémité d'un arbre de renvoi portant à une extrémité opposée, de l'autre côté du moyeu de synchroniseur, un second pignon fixe engrenant avec un pignon fixe du second arbre primaire pour la commande de marche arrière par accouplement avec le second arbre secondaire d'un second pignon fou de marche avant engrenant avec un pignon fixe du second arbre primaire.

D'autres caractéristiques avantageuses de l'invention apparaîtront dans la description qui va suivre d'un mode de réalisation particulier, donné à titre d'exemple et représenté sur les dessins annexés.
La figure 1 est un schéma d'ensemble, en coupe à plans rabattus, d'une boîte de vitesses selon l'invention.
La figure 2 est une vue de détail, en coupe axiale, de la commande de marche arrière.

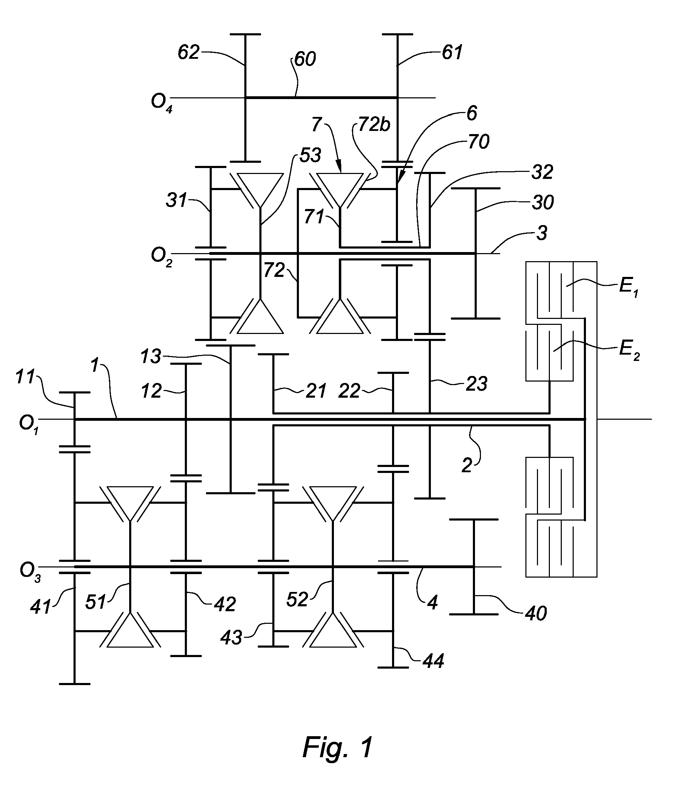

La figure 1 montre schématiquement l'ensemble d'une boîte de vitesses selon l'invention, dans une coupe à plans rabattus passant par les axes des différents arbres.

Dans l'exemple préférentiel représenté sur la figure, la boîte de vitesses est une boîte à double embrayage, avec six vitesses de marche avant et une marche arrière.

Cette boîte comporte donc, de façon classique, deux arbres primaires enfilés l'un dans l'autre et tournant autour d'un même axe central O₁, respectivement un arbre primaire plein 1 et un arbre primaire creux 2 qui s'étend sur environ la moitié de la longueur de l'arbre plein 1 et est enfilé sur la partie avant de celui-ci tournée vers un embrayage double E comportant, de façon classique, une cage tournant autour de l'axe central O₁ et sur laquelle est appliqué un couple moteur, et deux embrayages E1, E2 reliés respectivement à l'arbre central 1 et à l'arbre creux 2.

Pour transmettre le couple moteur, avec différents rapports, à un arbre de sortie entraîné par un différentiel non représenté, les deux arbres primaires 1, 2 portent un ensemble de pignons fixes, par exemple trois pignons fixes 11, 12, 13, montés sur la partie arrière de l'arbre plein 1 et correspondant aux rapports impairs, respectivement de première, de troisième et de cinquième et trois pignons fixes 21, 22, 23 montés sur l'arbre tubulaire 2 et correspondant aux rapports pairs, respectivement de deuxième, de quatrième et de sixième dans l'exemple représenté.

D'autres dispositions, également connues, sont possibles.

Ces pignons fixes engrènent respectivement avec des pignons fous répartis sur deux arbres secondaires 3, 4, placés de part et d'autre des arbres primaires et tournant chacun autour d'un axe O₂, O₃ parallèle à l'axe central O₁. Dans l'exemple représenté sur la figure 1, un premier arbre secondaire 3 porte deux pignons fous, respectivement 31 engrenant avec le pignon fixe 13 pour le rapport de cinquième et 32 engrenant avec le pignon fixe 23 pour le rapport de sixième, et un second arbre secondaire 4 porte quatre pignons fous, respectivement 41, 42 qui engrènent avec les pignons fixes 11 et 12 pour les rapports de première et de troisième et 43, 44 qui engrènent avec les pignons fixes 21, 22 pour les rapports de quatrième et de seconde.

Chaque pignon fou peut être solidarisé en rotation sélectivement avec l'arbre qui le porte par un organe d'accouplement sélectif de type classique constitué, par exemple, d'une rondelle crabot rapportée, d'un cône de synchroniseur et de multi-anneaux de synchroniseur empilés sur le cône des pignons fous, l'ensemble pouvant être solidarisé en rotation sélectivement avec un moyeu de synchroniseur fixé sur l'arbre.

Dans l'exemple représenté, les pignons fous du second arbre secondaire 4 sont répartis en deux paires associées respectivement à deux organes doubles d'accouplement, placés chacun entre deux pignons. Ainsi, les deux pignons fous 41, 42 de rapports impairs coopèrent avec un même moyeu de synchroniseur 51 fixé entre eux sur l'arbre 4 et les pignons fous 43, 44 de rapports pairs coopèrent avec un moyeu de synchroniseur 52 fixé sur l'arbre 4 entre lesdits pignons.

Le premier arbre secondaire 3 porte trois pignons fous, respectivement les deux pignons fous 31 de cinquième et 32 de sixième et le pignon fou de marche arrière 6. Cependant, alors que dans les dispositions antérieures, le pignon fou de marche arrière était placé à une extrémité, soit à l'avant, soit à l'arrière de l'arbre secondaire, dans l'invention, le pignon fou de marche arrière 6 est placé entre les deux pignons fous de marche avant 31, 32 et peut être solidarisé en rotation avec l'un desdits pignons, par exemple le pignon fou 32 de sixième dans l'exemple représenté.

Dans ce cas, le pignon fou de cinquième peut être solidarisé en rotation avec le premier arbre secondaire 3 par un organe d'accouplement simple comportant un moyeu de synchroniseur 53.

Dans une disposition connue, par exemple, par le document DE-A-198 21 164, le pignon fou de sixième et celui de marche arrière sont associés à un crabot double comportant un même moyeu de synchroniseur placé entre ces deux pignons et calé en rotation sur l'arbre. Il en résulte que l'arbre de renvoi doit enjamber ce crabot double ainsi que le crabot simple associé au pignon de cinquième et présente donc une certaine longueur.

Selon l'invention, on utilise également un arbre de renvoi 60 portant deux pignons fixes écartés 61, 62 mais la longueur de l'arbre, c'est-à-dire la distance entre ces deux pignons fixes peut être beaucoup plus faible, du fait que le pignon fou de marche arrière 6 est placé, avec son organe d'accouplement 7, entre le pignon fou de sixième 32 et le crabot 53 du pignon fou de cinquième 31.

Comme habituellement, le pignon fou de sixième 32 est monté librement rotatif sur l'arbre secondaire 3 par l'intermédiaire d'une cage à aiguilles mais la cage externe de celle-ci est ménagée, dans ce cas, sur une jupe cylindrique 70 qui s'étend sur une certaine longueur le long de l'arbre 3 de façon à laisser, entre le pignon de sixième 32 et son organe d'accouplement 7, un espace libre pour le pignon fou de marche arrière 6 qui est lui-même monté fou sur la jupe 70.

L'organe d'accouplement 7 est alors double, le moyeu de synchroniseur 71 étant fixé sur l'extrémité de la jupe 70 opposée au pignon 32 de façon à coopérer, d'un côté avec le pignon fou de marche arrière 6 et, de l'autre, avec un moyeu d'accouplement 72 fixé sur l'arbre 3, entre l'extrémité de la jupe 70 et l'organe d'accouplement 53 du pignon de cinquième 31 avec l'arbre secondaire 3.

L'organe d'accouplement double 7 comporte donc, de chaque côté du moyeu de synchroniseur 71, un ensemble d'accouplement constitué, comme habituellement, d'une rondelle crabot rapportée, d'un cône de synchroniseur et de multi-anneaux de synchroniseur, afin de solidariser en rotation sélectivement le moyeu de synchroniseur 71, d'un côté avec le moyeu d'accouplement 72 fixé sur l'arbre 3 et, de l'autre, avec le pignon fou de marche arrière 6.

Une telle disposition permet donc, par l'intermédiaire du moyeu de synchroniseur 71, de solidariser sélectivement en rotation le pignon fou de sixième 32, soit avec l'arbre secondaire 3 pour l'engagement de la sixième vitesse, soit avec le pignon fou 6 pour l'engagement de la marche arrière.

Pour cela, le pignon fou de marche arrière 6 est relié cinématiquement à l'un des pignons fous de marche avant porté par le second arbre secondaire 4, avec une inversion du sens de rotation.

Dans l'exemple préférentiel représenté sur les dessins, cette liaison cinématique avec inversion du sens de rotation est réalisée par l'arbre de renvoi 60 qui tourne autour d'un axe O₄ parallèle aux axes O₂, O₃ et porte deux pignons fixes écartés, respectivement un premier pignon 61 qui engrène avec le pignon fou de marche arrière 6 et un second pignon 62 qui est centré sensiblement dans le même plan transversal que le pignon fou de cinquième 31 et engrène avec le même pignon fixe 13 de l'arbre primaire central 1.

Une telle disposition permet de faire transiter un couple moteur faible appliqué sur le pignon de sixième 32 jusqu'à un rapport à fort ratio, de préférence le pignon de première 41, en passant par le moyeu de synchroniseur 54, le pignon fou de marche arrière 6, l'arbre de renvoi 60 qui inverse le sens de rotation, le pignon fixe de cinquième 13 et l'arbre primaire central 1 qui entraîne, par l'intermédiaire du pignon fixe 11, le pignon fou de première 41. Celui-ci est solidarisé en rotation par le moyeu de synchroniseur 51 avec l'arbre secondaire 4 qui entraîne le pignon d'attaque 40 dans le sens inverse de celui du pignon de marche avant 32, c'est-à-dire en marche arrière.

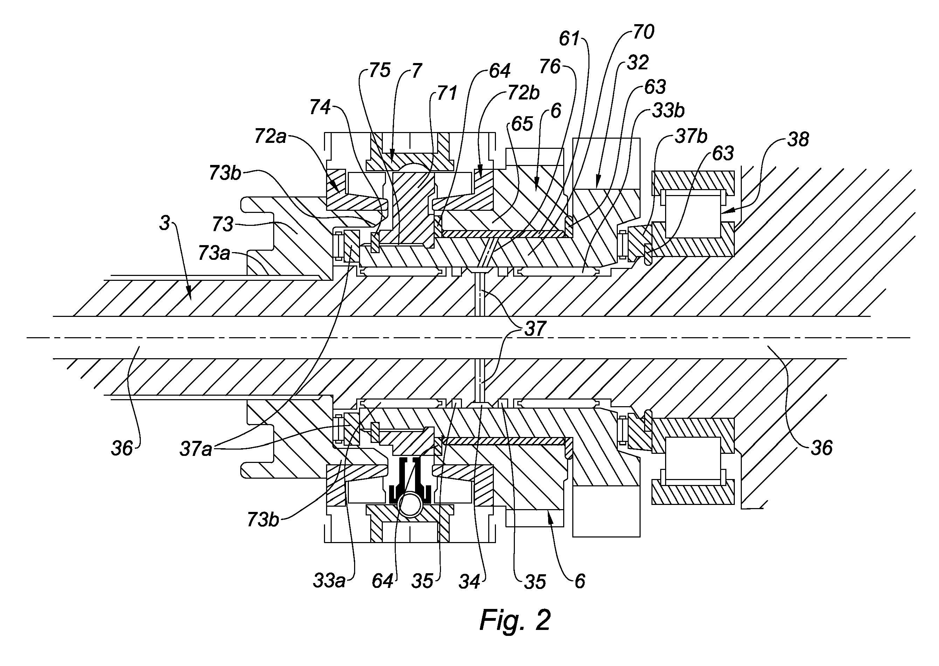

La figure 2 montre en détail un exemple de réalisation d'une telle commande de marche arrière comportant, comme indiqué plus haut, une jupe cylindrique 70 montée librement rotative autour de l'arbre secondaire 3 par l'intermédiaire de deux roulements à aiguilles 33 et s'étendant entre le pignon fou de sixième 32 et le moyeu de synchroniseur 71 d'un organe double d'accouplement sélectif 7 comportant deux ensembles de crabotage synchronisés 72a, 72b permettant de solidariser le moyeu de synchroniseur 71, d'un côté avec un moyeu d'accouplement 73 calé en rotation sur l'arbre secondaire 3 et, de l'autre, avec le pignon fou de marche arrière 6 qui est monté fou sur la jupe 70 entre le moyeu de synchroniseur 71 et le pignon fou de sixième 32.

Ce pignon 32 est fixé à une extrémité de la jupe 70 avec laquelle il forme une seule et même pièce, le moyeu de synchroniseur 71 étant calé en rotation à l'extrémité opposée de la jupe, par des cannelures 74 et immobilisé axialement entre un lamage de la jupe et un clips 75.

Le pignon fou de marche arrière 6 est monté rotatif sur la partie de la jupe 70 comprise entre le pignon fou 32 et le moyeu de synchroniseur 71 par l'intermédiaire d'un organe de centrage 61 qui peut être un roulement à aiguilles mais est constitué de préférence, dans l'exemple représenté sur la figure 2, d'une bague mince lubrifiée.

La denture 60 ménagée sur la périphérie du pignon fou 6 s'étend seulement sur une partie de l'espace compris entre le pignon 32 et le moyeu 71 car, pour assurer la solidarisation en rotation avec ce dernier, le pignon fou 6 est muni lui-même d'une portée de centrage 65 sur laquelle est monté l'ensemble cône et crabot 72b permettant l'accouplement synchronisé du pignon 6 avec le moyeu de synchroniseur 71. De l'autre côté, ce dernier peut être solidarisé en rotation avec le moyeu d'accouplement 73 qui est enfilé sur l'arbre 3 et solidarisé avec celui-ci par des cannelures 73a et comporte d'autre part, du côté tourné vers le moyeu 71, une jupe 73b sur laquelle est monté un ensemble cône et crabot 72a.

De la sorte, le pignon fou de marche avant 32 peut être solidarisé en rotation avec l'arbre secondaire 3 par l'intermédiaire de la jupe 70, du moyeu de synchroniseur 71 et du moyeu d'accouplement 73, pour l'engagement de la vitesse correspondante, c'est-à-dire, la sixième vitesse dans l'exemple représenté. Le pignon 32 et la jupe 70 tournent donc à la même vitesse et dans le même sens que l'arbre secondaire 3, c'est-à-dire dans le sens de marche avant. En revanche, le pignon fou de marche arrière 6 qui est solidarisé en rotation avec l'arbre central 1 par l'arbre de renvoi 60 et le pignon fixe 13 ne tourne pas. Il existe donc une différence de vitesse importante au niveau de la bague mince 61 qui doit être lubrifiée de façon particulièrement efficace.

A cet effet, le montage rotatif de la jupe 70 sur l'arbre secondaire 3 est assuré par deux cages à aiguilles espacées 33a, 33b, placées dans deux logements annulaires ménagés sur la périphérie de l'arbre 33 et entre lesquels est disposée une gorge circulaire 34 isolée des deux cages à aiguilles par des segments 35 qui assurent l'étanchéité de la gorge 34 avec possibilité de rotation de la jupe 71 par rapport à l'arbre 3.

Cet arbre secondaire 3 est percé d'un conduit axial 36 alimenté en huile sous pression et relié à la gorge circulaire 34 par un ou plusieurs conduits 37. De même, un ou plusieurs conduits transversaux 76 sont ménagés dans l'épaisseur de la jupe 70 pour mettre en communication la gorge circulaire 34 avec la bague mince 61 qui est ainsi lubrifiée sous pression et peut donc être réalisée simplement en un métal résistant à l'usure et capable d'éviter les risques de grippage.

Une telle disposition permet d'admettre des différences de vitesses très importantes entre le pignon fou de marche arrière 6 et le pignon de sixième 32, pouvant même aller jusqu'à 14 000 tours minute si le pignon fou de marche arrière 6, qui reste relié à l'arbre primaire central 1, à tendance à tourner à l'envers du pignon de marche avant 32.

Pour cette raison également, des butés axiales 63, 64 sont placées entre le pignon fou 6 et, respectivement le pignon de sixième 32 et le moyeu de synchroniseur 71.

Lorsque l'on engage la marche arrière, le couple moteur est encore appliqué par l'embrayage E₂ sur l'arbre tubulaire 2 et transmis par le pignon fixe 23 au pignon de marche avant 32 qui, dans ce cas, est solidarisé avec le pignon de marche arrière 6, par l'intermédiaire de la jupe 70 et du moyeu de synchroniseur 71. Le couple est alors transmis au second arbre secondaire 4 portant le pignon d'attaque 40, successivement par l'arbre de renvoi 60 qui inverse le sens de rotation, le pignon fixe 13, l'arbre primaire 1, le pignon fixe 11 et le pignon fou de première 41 qui est solidarisé avec le second arbre secondaire 4 par le moyeu de synchroniseur 51.

Cependant, le pignon d'attaque 30 monté sur le premier arbre secondaire 3 engrène également avec le différentiel et tourne donc également dans le sens de marche arrière, c'est-à-dire dans le sens inverse du pignon de sixième 32. Il en résulte encore une différence de vitesse importante entre la jupe 70 et l'arbre secondaire 3 qui peut être admise grâce aux roulements à aiguilles 33a, 33b également lubrifiés à partir de la conduite axiale 36. Il se produit, cependant, des efforts axiaux importants qui doivent être encaissés par des butés axiales 37a 37b interposées respectivement entre l'extrémité arrière de la jupe 71 et le moyeu d'accouplement 73 et, à l'avant, entre le pignon de sixième 32 et le palier avant 38 du premier arbre secondaire 3.

Une telle disposition permet donc de commander la marche arrière avec un rapport compris entre la première et la seconde. Le couple moteur est appliqué sur le pignon de marche arrière à partir d'une vitesse d'entrée élevée à couple faible, par exemple de sixième ou de cinquième, et est transmis par l'arbre de renvoi 60 jusqu'à un rapport à fort ratio, par exemple de première ou seconde. Cependant, cet avantage important est obtenu sans augmentation notable de l'encombrement de la boîte, l'arbre de renvoi 60 ayant une longueur particulièrement faible.

Bien entendu, l'invention ne se limite pas aux détails du mode de réalisation préférentiel qui vient d'être décrit en référence aux dessins annexés et, en particulier, à la disposition mécanique de la figure 2, d'autres mécanismes équivalents pouvant être utilisés.

D'autre part, l'invention est particulièrement avantageuse dans le cas d'une boîte à six vitesses et double embrayage mais présenterait également des avantages dans le cas d'une boîte plus simple à embrayage unique.

## Revendications

1. Commande de marche arrière pour une boîte de vitesses à double embrayage comprenant deux arbres primaires (1, 2) enfilés l'un dans l'autre sur lesquels sont montés, respectivement, deux groupes de pignons fixes (11-13, 21-23) engrenant respectivement avec (n) pignons fous de marche avant (31, 32, 41-44) et un pignon fou de marche arrière (6), qui sont montés fous sur deux arbres secondaires (3, 4) et peuvent être solidarisés en rotation, chacun avec l'arbre qui le porte, par un organe d'accouplement sélectif (51, 52, 53, 7), boîte de vitesses dans laquelle le pignon de marche arrière (6) est monté fou sur une jupe cylindrique (70) tournant librement sur un premier arbre secondaire (3), et portant, à une première extrémité, un premier pignon fou de marche avant (32) pouvant être entraîné en rotation par un premier arbre primaire (2) et, à une seconde extrémité, un organe double d'accouplement (7) permettant de solidariser sélectivement en rotation ledit premier pignon fou de marche avant (32), par l'intermédiaire de la jupe (70), soit avec le premier arbre secondaire (3) pour l'engagement de la vitesse correspondante, soit avec le pignon fou de marche arrière (6), qui est relié cinématiquement avec un second pignon fou de marche avant (41) monté fou sur le second arbre secondaire (4) et pouvant être solidarisé avec celui-ci pour l'engagement de la marche arrière,
**caractérisée par le fait que** le pignon fou de marche arrière (6) est relié cinématiquement, avec inversion du sens de rotation, au second pignon fou de marche avant (41), par l'intermédiaire du second arbre primaire (1) et que, pour l'engagement de la marche arrière, le couple moteur appliqué avec un premier rapport par le premier arbre primaire (2) sur le premier pignon fou de marche avant (32), est transmis avec un second rapport au second arbre secondaire (4), par l'intermédiaire du second arbre primaire (1) et du second pignon fou de marche avant (41).

2. Commande de marche arrière selon la revendication 1, **caractérisée par le fait que** la jupe cylindrique (70) et le premier pignon fou de marche avant (32) sont réalisés en une seule pièce.

3. Commande de marche arrière selon l'une des revendications 1 et 2, **caractérisée par le fait que** la jupe cylindrique (70) est montée rotative sur le premier arbre secondaire (3) par l'intermédiaire d'une cage à aiguilles (33).

4. Commande de marche arrière selon l'une des revendications précédentes, **caractérisée par le fait que** le pignon fou de marche arrière (6) est monté rotatif sur la jupe cylindrique (70) par l'intermédiaire d'une bague mince (61).

5. Commande de marche arrière selon l'une des revendications précédentes, **caractérisée par le fait qu'**elle comporte un circuit de lubrification sous pression (36, 37, 76) débouchant entre la jupe cylindrique (70) et une portée de centrage (62) du pignon fou de marche arrière (6) sur ladite jupe (70).

6. Commande de marche arrière selon la revendication 5, **caractérisée par le fait que** le circuit de lubrification comporte une conduite d'alimentation (36) ménagée à l'intérieur du premier arbre secondaire (3) et reliée à une source de lubrifiant sous pression, un espace annulaire étanche (34), ménagé au niveau du roulement (33), entre les faces opposées de la jupe cylindrique (70) et de l'arbre secondaire (3) et relié à la conduite d'alimentation par au moins un conduit transversal de liaison (37), et au moins un conduit (76) traversant la jupe (70) et débouchant à une première extrémité dans l'espace annulaire (34) et à une seconde extrémité dans l'interface entre la jupe cylindrique (70) et la portée (65) de centrage du pignon fou de marche arrière (6).

7. Commande de marche arrière selon l'une des revendications précédentes, **caractérisée par le fait que** des butées axiales (64, 63) sont interposées, de chaque côté du pignon fou de marche arrière (6), entre ce dernier et, respectivement, le moyeu de synchroniseur (71) et le premier pignon fou de marche avant (32).

8. Commande de marche arrière selon l'une des revendications précédentes, **caractérisée par le fait que** le pignon fou de marche arrière (6) est relié cinématiquement au second pignon fou de marche avant (41) par l'intermédiaire d'un arbre de renvoi (60) parallèle à l'axe central (O₁)et portant deux pignons fixes écartés engrenant, l'un (61) avec le pignon fou de marche arrière (6) et l'autre (62) avec un pignon fixe (13) de l'arbre primaire (1) entraînant le second pignon fou de marche avant (41) avec inversion du sens de rotation.

9. Commande de marche arrière selon l'une des revendications précédentes, pour une boîte de vitesses à double embrayage, dans laquelle l'un des arbres primaires (2) correspond aux vitesses de rang pair et l'autre arbre primaire (1) aux vitesses de rang impair, **caractérisée par le fait que** le premier pignon fou de marche avant (32) sur lequel est appliqué le couple moteur, correspond à un rapport de rang élevé tel que 6^{ème} ou 5^{ème} et que le second pignon fou de marche avant (41) relié au pignon de marche arrière (6), correspond à un rapport à fort ratio, tel au 1^{ère} ou 2^{ème}.

10. Commande de marche arrière selon l'une des revendications précédentes, **caractérisée par le fait que** le premier pignon fou de marche avant (32) correspond à une vitesse de rang élevé, telle que 5^{ème} ou 6^{ème} et que le second pignon fou de marche avant (41) correspond à une vitesse de rang faible, telle que 1^{ère} ou 2^{ème}.

11. Commande de marche arrière pour une boîte de vitesses à 6 vitesses avant et double embrayage, comportant deux groupes de pignons fixes (11-13, 21-23) portés respectivement par deux arbres primaires coaxiaux enfilés l'un dans l'autre, respectivement un arbre primaire central (1) et un arbre primaire tubulaire (2) et deux arbres secondaires (3, 4) portant chacun un pignon (30, 40) d'attaque d'un différentiel, respectivement un premier arbre secondaire (3) portant un pignon fou de marche arrière (6) et au moins deux pignons fous de marche avant (31, 32) et un second arbre secondaire (4) portant au plus quatre pignons fous de marche avant (41, 42, 43, 44), chaque pignon fou de marche avant pouvant être solidarisé sélectivement en rotation avec l'arbre qui le porte, par un organe d'accouplement sélectif, **caractérisée par le fait que** l'organe d'accouplement sélectif (7) associé à un premier pignon fou (32) du premier arbre secondaire (3) engrenant avec un pignon fixe (23) d'un premier arbre primaire (2), comporte un moyeu de synchroniseur (71) fixé en rotation à une seconde extrémité d'une jupe cylindrique (70) montée librement rotative sur le premier arbre secondaire (3) et ayant une première extrémité sur laquelle est fixé en rotation ledit premier pignon fou de marche avant (32), ledit moyeu (71) pouvant être solidarisé sélectivement, du côté opposé à ladite jupe (70), avec un moyeu d'accouplement (72) fixé en rotation sur le premier arbre secondaire (3), que le pignon fou de marche arrière (6) est monté fou sur ladite jupe cylindrique (70), entre le premier pignon fou de marche avant (32) et le moyeu de synchroniseur (71) et peut être solidarisé sélectivement avec ce dernier, ledit pignon fou de marche arrière (6) engrenant avec un premier pignon fixe (61) monté à une extrémité d'un arbre de renvoi (60) portant à une extrémité opposée, de l'autre côté du moyeu de synchroniseur (71), un second pignon fixe (62) engrenant avec un pignon fixe (13) du second arbre primaire (2) pour la commande de marche arrière par accouplement avec le second arbre secondaire (4) d'un second pignon fou de marche avant (41) engrenant avec un pignon fixe (11) du second arbre primaire (1).
